# EUROPÄISCHE PATENTANMELDUNG

(11) **EP 1 016 551 A1**
(43) Veröffentlichungstag der Anmeldung: **05.07.2000**
(21) Anmeldenummer: 98124780.2
(22) Anmeldetag: 29.12.1998
(51) Int. Cl.: B44C 5/00

(54) **Gegenstand mit zwei übereinander angeordneten und an ihren Rändern miteinander verschweissten elastischen Folien sowie Verfahren und Vorrichtung zur Herstellung**

(71) Anmelder: Hirsch & Partner GmbH, 9021 Klagenfurt (AT)
(72) Erfinder: Rosenzopf, Hermann, 9020 Klagenfurt (AT)
(74) Vertreter: Vinazzer, Edith, Dipl.-Ing.

(57) **Zusammenfassung**

Die Erfindung betrifft einen Gegenstand mit übereinander angeordneten und im Bereich ihrer Ränder miteinander verschweißten elastischen Folien (3, 4) aus einem Kunststoff, zwischen welchen sich Flüssigkeit befindet. Zwei der Folien (3, 4) sind im Bereich der beiden Stirnflächen ihrer Ränder zumindest im Wesentlichen randlos verschweißt. Nach dem erfindungsgemäßen Verfahren werden die beiden Folien (3, 4), gegebenenfalls unter Einbezug einer weiteren Folie (6), an den Stirnflächen ihrer Ränder zusammengeführt und anschließend verschweißt.

Die erfindungsgemäße Vorrichtung weist zwei Formteile (1a, 2a) auf, die mit je einem Schweißprofil (1b, 2b) versehen sind, die zusammengefügt ein schalenartig geformtes Schweißbett bilden.

## Beschreibung

Die vorliegende Erfindung betrifft einen Gegenstand mit übereinander angeordneten und im Bereich ihrer Ränder miteinander verschweißten elastischen Folien aus einem Kunststoff, zwischen welchen sich Flüssigkeit befindet. Die vorliegende Erfindung betrifft auch ein Verfahren und eine Vorrichtung zur Herstellung eines solchen Gegenstandes.

Es sind bereits Gegenstände bekannt, bei denen zwischen zumindest zwei miteinander verbundenen Folien Flüssigkeit untergebracht ist. So ist zum Beispiel in der US-A 4 738 888 ein Tisch- bzw. Platzset bekannt, welches eine obere und eine untere Folie aufweist, von welchen zumindest die obere transparent ausgeführt ist. Die beiden Folien sind an ihren überlappenden Rändern miteinander verschweißt. Die zwischen den beiden Folien befindliche Flüssigkeit, beispielsweise gefärbtes Wasser, kann sich zwischen den Folien frei bewegen, indem das gesamte Tischset bewegt oder die obere Folie gedrückt wird. In der Flüssigkeit können zusätzlich kleine Gegenstände aus Metallfolie oder ähnlichem bewegbar untergebracht sein.

Aus der EP-B1 0 770 247 ist eine Unterlage für eine Computer-Maus, ein sogenanntes Maus-Pad, bekannt, die aus einer Unterfolie aus Schaumstoff besteht, auf die eine Trägerschicht aufkaschiert ist. Über der Trägerschicht liegend ist eine transparente Oberfolie vorgesehen, die am Rand durchgehend mit der Trägerschicht und der Unterfolie verschweißt ist. Zwischen der Trägerschicht und der Oberfolie ist eine farbige Flüssigkeit untergebracht, wobei das Volumen der Flüssigkeit geringer ist als das zur Verfügung stehende Raumvolumen. Derartige Maus-Pads besitzen ein besonders ansprechendes Äußeres.

Es ist ferner bekannt, verschiedene Gegenstände, beispielsweise Schlüsselanhänger, die mit nicht vermischbaren Flüssigkeiten unterschiedlicher Farben gefüllt sind, aus hartem Kunststoff als Formartikel herzustellen, die überlappende Verschweißungsnähte aufweisen.

Bei den bekannten, miteinander verschweißte und aus elastischem Kunststoff bestehende Folien aufweisenden Gegenständen sind die überlappend verschweißten Randbereiche oft unschön und haben zumindest zum Teil schärfere Kanten, die bei der Benützung stören.

Die Erfindung hat sich nun zur Aufgabe gestellt, einen Gegenstand der eingangs genannten Art diesbezüglich zu verbessern und für einen derart verbesserten Gegenstand ein einfaches Herstellverfahren und eine einfach zu handhabende Vorrichtung zur Herstellung bereitzustellen.

Was den Gegenstand betrifft, wird die gestellte Aufgabe erfindungsgemäß dadurch gelöst, dass zwei der Folien im Bereich der Stirnflächen ihrer Ränder zumindest im Wesentlichen randlos verschweißt sind.

Was das Verfahren betrifft, wird die gestellte Aufgabe erfindungsgemäß dadurch gelöst, dass zwei der Folien, gegebenenfalls unter Einbezug zumindest einer mittleren Folie, an den Stirnflächen ihrer Ränder zusammengeführt und anschließend verschweißt werden.

Die erfindungsgemäße Schweißvorrichtung ist dadurch gekennzeichnet, dass sie zwei Formteile aufweist, die mit je einem Schweißprofil versehen sind, die zusammengefügt ein schalenartig geformtes Schweißbett bilden.

Da ein gemäß der gegenständlichen Erfindung ausgeführter Gegenstand mit randlos bzw. im Wesentlichen randlos miteinander verschweißten Folien versehen ist, weist er keine optisch unschönen und bei der Handhabung störenden Verschweißungsränder auf. Dazu ist gemäß dem erfindungsgemäßen Verfahren vorgesehen, die Folien bei der Herstellung des Gegenstandes so zusammenzuführen, dass sie entweder an den Stirnflächen ihrer Ränder aneinanderstossen oder es ist vorgesehen, falls eine weitere Folie mitverschweißt wird, die Stirnflächen in eine fluchtende Anordnung zu bringen und anschließend zu schweißen. Die erfindungsgemäße Vorrichtung zur Herstellung des erfindungsgemäßen Gegenstandes und zur Durchführung des erfindungsgemäßen Verfahren ist sehr einfach und zweckmäßig aufgebaut.

Bei einer bevorzugten Ausführungsform des erfindungsgemäßen Gegenstandes kann im Inneren zumindest eine weitere Folie angeordnet sein, die entweder schwimmend aufgebracht ist und dabei vorzugsweise einen Umriss aufweist, der mit dem Umriss des Gegenstandes zumindest im Wesentlichen übereinstimmt, deren Fläche jedoch etwas kleiner ist, als die vom Umriss des Gegenstandes eingenommene Fläche, oder die mit den Rändern der beiden Folien zumindest teilweise verschweißt ist. Diese weitere Folie kann beliebig bedruckt sein und vorzugsweise als auffallender Werbeträger dienen.

Es ist möglich, den erfindungsgemäßen Gegenstand auf verschiedene Arten besonders ansprechend zu gestalten. Dies ist beispielsweise dadurch möglich, wenn die Folien aus glasklarem, aus transparentem oder aus undurchsichtigem Kunststoff, gegebenenfalls in beliebiger Farbe, bestehen.

Um weitere optische Effekte zu erzielen, kann der Gegenstand unterschiedliche, insbesondere miteinander nicht vermischbare Flüssigkeiten in verschiedenen Farben, ferner aber auch Schwimmteile, Schwebeteile oder dergleichen enthalten.

Die Herstellung eines erfindungsgemäßen Gegenstandes gemäß dem erfindungsgemäßen Verfahren ist dadurch einfach möglich, wenn eine erste Folie mittels Unterdruck oder dergleichen in eine Art Wannenform gebracht wird, wobei anschließend Flüssigkeit eingefüllt, eine zweite Folie aufgesetzt, die überstehenden Folienrändern abgeschnitten und ein Zusammenführen der Stirnflächen erfolgt.

Das Einbringen zumindest einer weiteren Folie, die insbesondere bedruckt sein kann und somit als Werbeträger dienen kann, ist nach dem erfindungsgemäßen Verfahren besonders einfach dadurch möglich, dass diese vor dem Auflegen der zweiten Folie auf die Oberfläche der Flüssigkeit aufgelegt wird, wobei diese Folie entweder einen Umriss aufweist, welcher mit dem Umriss des Gegenstandes zumindest im Wesentlichen übereinstimmt und deren Fläche jedoch etwas kleiner ist, als die vom Umriss des Gegenstandes eingenommene Fläche, oder die mit den Rändern der beiden Folien zumindest teilweise verschweißt wird.

Bei einer einfachen, zweckmäßigen Ausführungsform der erfindungsgemäßen Vorrichtung zur Herstellung des Gegenstandes sind die beiden Formteile jeweils Teile eines Ober- und eines Unterwerkzeuges, die aufeinander zu bewegbar sind.

Beide Schweißprofile werden so ausgestaltet, dass sie dem gewünschten Radius des Gegenstandes im Bereich der Schweißstelle entsprechen, wobei sie insbesondere mit übereinstimmenden kreisbogenförmigen oder ähnlichen Querschnitten versehen werden. Dadurch entstehen besonders glatte und optisch ansprechende Schweißstellen am erfindungsgemäßen Gegenstand.

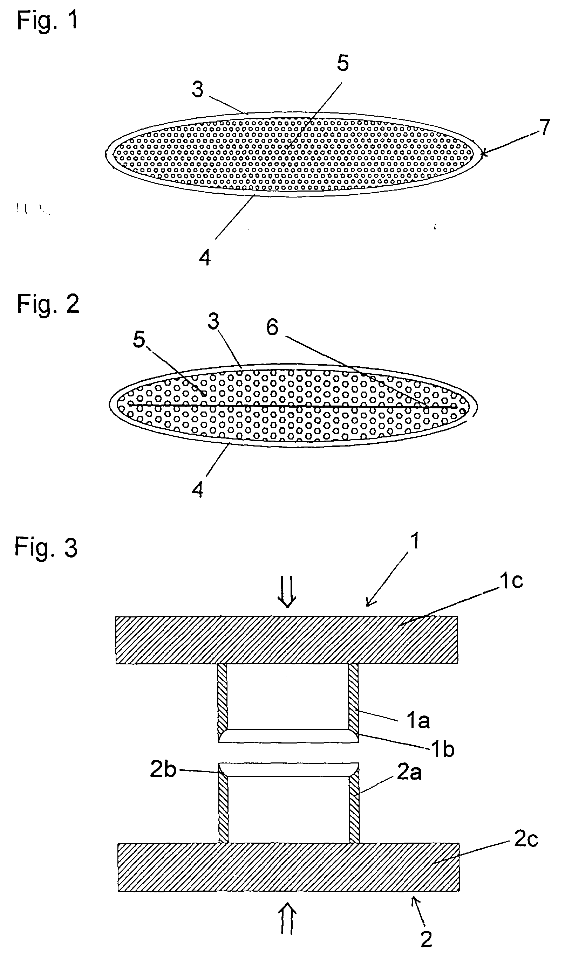

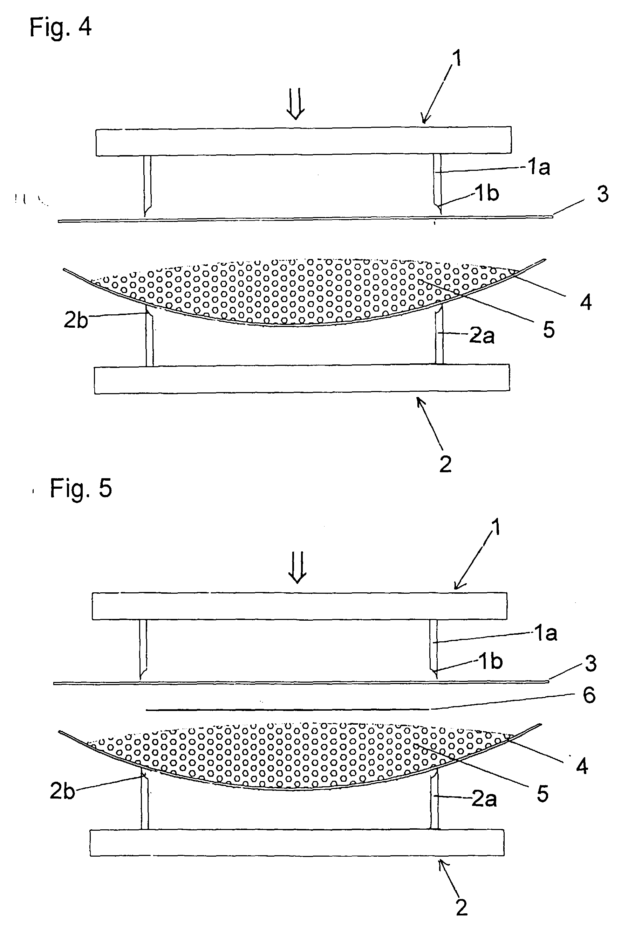

Weitere Merkmale, Vorteile und Einzelheiten der Erfindung werden nun anhand der Zeichnung, die Ausführungsbeispiele des erfindungsgemäßen Gegenstandes und des erfindungsgemäßen Herstellvorganges darstellen, näher beschrieben. Sämtliche Zeichnungsfiguren sind schematische und nicht maßstabsgetreue Darstellungen. Fig. 1 und Fig. 2 zeigen je eine Ausführungsvariante eines erfindungsgemäßen Gegenstandes im Schnitt, Fig. 3 zeigt wesentliche Teile einer Ausführungsform einer Vorrichtung zur Herstellung des erfindungsgemäßen Gegenstandes im Schnitt, Fig. 4 und Fig. 5 zeigen jeweils einen Zwischenschritt bei der Herstellung der erfindungsgemäßen Gegenstände gemäß Fig. 1 und Fig. 2 in einer erfindungsgemäßen Vorrichtung im Schnitt.

Fig. 1 zeigt eine Ausführungsform eines erfindungsgemäß ausgeführten Gegenstandes im Querschnitt. Dabei handelt sich um einen kreisförmigen und im Querschnitt etwa elliptischen Gegenstand, beispielsweise einen Schlüsselanhänger. Der dargestellte Gegenstand besteht aus zwei bezüglich ihrer Form und ihrer Größe übereinstimmenden Folien 3, 4 aus einem elastischen Kunststoff, die an ihren Rändern miteinander verschweißt sind und zwischen welchen sich Flüssigkeit 5 befindet. Die beiden Folien 3, 4 sind leicht gewölbt und im Bereich der aneinander stossenden Stirnflächen ihrer Ränder unter Ausbildung einer Schweißstelle 7 zumindest im Wesentlichen randlos miteinander verschweißt. Der von den beiden Folien 3, 4 umschlossene Innenraum ist vollständig bzw. zumindest im Wesentlichen vollständig mit Flüssigkeit 5 befüllt, wobei in der Flüssigkeit 5 eine oder mehrere Luftblase(n) enthalten sein können.

Der für die beiden Folien 3, 4 verwendete elastische Kunststoff kann beispielsweise PVC oder ein anderer verschweißbarer Kunststoff, beispielsweise Polypropylen sein. Die Stärke der verwendeten Folien 3, 4, die sich insbesondere nach dem Einsatzzweck und dem gebildeten Gegenstand richtet, beträgt in der Größenordnung von einigen Zehntelmillimeter, vorzugsweise in der Größenordnung von einem Millimeter.

Die verwendete Folie 3, 4 kann eine glasklare Folie, eine eingefärbte transparente Folie oder eine undurchsichtig eingefärbte Folie sein. Bei ein- und demselben Gegenstand können dabei Folien unterschiedlicher Art, beispielsweise eine Kombination einer glasklaren mit einer transparent eingefärbten Folie, verwendet werden.

Als Flüssigkeit 5 kommen verschiedene Flüssigkeiten, beispielweise Glyzerin, Öle und Wasser in Frage. Die Flüssigkeiten können glasklar oder in beliebigen Farben eingefärbt sein, dabei können auch verschiedene Flüssigkeiten in ein- und demselben Gegenstand verwendet werden. Bei verschieden Flüssigkeiten werden vorzugsweise solche verwendet, die sich miteinander nicht vermischen, um mit unterschiedlichen Farben optisch ansprechende Effekte zu erzielen. Darüber hinaus können in diese Flüssigkeiten Schwebeteile oder Schwimmteile verschiedenster Formen und Farben eingemischt bzw. eingelegt sein.

Die Form des Gegenstandes in Draufsicht kann nahezu beliebig sein.

Die in Fig. 2 dargestellte Ausführungsform eines erfindungsgemäßen Gegenstandes entspricht im Wesentlichen jenem gemäß Fig. 1, mit dem Unterschied, dass in die Flüssigkeit 5 zwischen den Folien 3, 4, die miteinander wie oben beschrieben randlos verschweißt sind, zumindest eine weitere Folie 6, die ebenfalls aus PVC sein kann, eingebracht ist. Diese weitere Folie 6 kann glasklar, oder eingefärbt sowie beliebig bedruckt sein, um besondere Effekte zu erzielen oder als Werbeträger zu dienen. Die Folie 6 ist dabei nicht mit den beiden anderen Folien 3, 4 verschweißt. Bei der dargestellten Ausführungsform besitzt sie zwar insbesondere einen Umriss, welcher mit dem Umriss des Gegenstandes bzw. der Folien 3, 4 übereinstimmt, ist aber gegenüber diesem bzw. diesen etwas kleiner ausgeführt, so dass zwischen der Folie 6 und dem Innenrand des Gegenstandes ein Abstand in der Größenordnung von 1 bis 2 mm verbleibt. Dieser gestattet ein freies, ungehindertes Fließen der Flüssigkeit 5 im Inneren des Gegenstandes zwischen den beiden Folien 3, 4.

Alternativ dazu kann bei nicht dargestellten Ausführungsformen vorgesehen werden, die weitere Folie an den Rändern der beiden Folien 3, 4 zumindest teilweise mitzuverschweißen, indem die weitere Folie vor dem Auflegen der oberen Folie 4 in entsprechender Größe und entsprechend positioniert wird. Dabei können Öffnungen, Löcher und dgl. in dieser Folie vorgesehen werden, um ein Fließen der Flüssigkeit zu ermöglichen. Das "Mitverschweißen" kann auch nur über kleine Fortsätze, Zäpfchen oder dergleichen der zusätzlichen Folie erfolgen.

Fig. 3 zeigt die wesentlichen Teile einer Ausführungsform einer erfindungsgemäßen Vorrichtung zur Herstellung von erfindungsgemäß ausgeführten Gegenständen. Die Vorrichtung umfasst ein Oberwerkzeug 1 und ein Unterwerkzeug 2, die jeweils einen Träger 1c, 2c aufweisen. Mit dem Träger 1c ist ein oberer Formteil 1a und mit dem Träger 2c ist ein unterer Formteil 2a fest verbunden. Die einander zugewandten, geschlossen umlaufenden, freien Ränder der Formteile 1a, 2a sind übereinstimmend ausgeführt, ihre Umrissgestalt bestimmt dem Umriss des herzustellenden Gegenstandes. Die einander zugewandten und übereinstimmend ausgeführten Randbereiche der Formteile 1a, 2a sind ferner mit ebenfalls übereinstimmend ausgeführten Schweißprofilen 1b, 2b versehen. Jedes Schweißprofil 1b, 2b ist dabei in Form einer den jeweiligen inneren Randbereich des Formteiles 1a, 2a umlaufenden Schale ausgeführt. Diese Schalen sind an dem im Bereich der Schweißstelle erwünschten Radius des Produktes und gegebenenfalls auch an die Dicke der verwendeten Folien 3, 4 angepasst. Die gegenseitige Anordnung und Ausgestaltung der beiden schalenartig gestalteten Schweißprofile 1b, 2b erfolgt derart, dass beim Zusammenführen von Oberwerkzeug 1 mit Unterwerkzeug 2 in Richtung der in Fig. 3 dargestellten Pfeile ein Zusammenfügen der beiden Schalen zu einem einheitlichen Schweißbett erfolgt.

Dabei kann beispielsweise die Querschnittform der beiden Schweissprofile 1b, 2b ein Viertelkreis oder viertelkreisähnlich sein, so dass durch das Zusammenführen des Oberwerkzeuges 1 und Unterwerkzeuges 2 eine im Querschnitt halbkreisförmige oder halbkreisähnliche Schale entsteht.

Anhand der Fig. 4 und Fig. 5 wird nun die Herstellung der beiden dargestellten Ausführungsvarianten eines erfindungsgemäßen Gegenstandes näher erläutert.

Fig. 4 zeigt dabei schematisch die Herstellung eines Produktes, wie es in Fig. 1 dargestellt ist. Auf das Unterwerkzeug 2 wird vorerst ein Stück der einen Folie 4, welches größer ist als die vom Formteil 2a umschlossene Fläche, aufgelegt. Über eine geeignete, hier nicht dargestellte und nicht Gegenstand der vorliegenden Erfindung bildende Einrichtung wird die Folie 4 durch ein Absaugen der Luft im Raum der zwischen Folie 4 und Formteil 2a nach unten angesaugt und in eine gewölbte Form, eine Art Wannenform, gebracht. In die derart gebildete Wanne wird jene Flüssigkeit 5 bzw. es werden jene Flüssigkeiten eingefüllt, die schlussendlich im Inneren des fertigen Gegenstandes sein soll bzw. sollen. Falls erwünscht, werden in die eingefüllte Flüssigkeit 5 kleine Schwimmteile eingelegt. Anschließend wird die zweite Folie 3 auf die Flüssigkeitsoberfläche aufgelegt. Dabei kann das Auflegen dieser Folie 3 so erfolgen, dass diese zuerst im Mittelbereich des Flüssigkeitsspiegels aufgesetzt wird. Dadurch wird, falls erwünscht, das Entstehen bzw. Verbleiben von Luftblasen zumindest weitgehend verhindert.

Nun wird das Oberwerkzeug 2 in Richtung des in Fig. 4 eingezeichneten Pfeiles herangeführt bis ein Schließen der beiden Werkzeugteile erfolgt ist, wodurch gleichzeitig die außen überstehenden Teile der Folien 3, 4 abgeschnitten werden und überflüssige Flüssigkeit 5 abrinnt. Die beiden Schweißprofile 1b, 2b führen die Stirnflächen der Ränder 3a, 4a der beiden Folien 3, 4 zusammen und es wird der Verschweißvorgang mittels Hochfrequenz oder einer anderen Schweißtechnik durchgeführt. Aufgrund des exakten Zusammenführens des Ober- und des Unterwerkzeuges 1, 2 wird eine randlose bzw. zumindest im Wesentlichen randlose Verschweißung der beiden Folien 3, 4 durchgeführt.

Falls eine weitere Folie 6 in den entstehenden Gegenstand eingebracht werden soll, wird, wie Fig. 5 zeigt, vor dem Aufbringen der zweiten Folie 3 die Mittelfolie 6 auf die Flüssigkeitsoberfläche aufgelegt.

Ein erfindungsgemäß ausgeführter bzw. nach dem erfindungsgemäßen Verfahren hergestellter Gegenstand kann nun, wie bereits erwähnt, ein Schlüsselanhänger, ein dekorativer Gegenstand, ein Spielzeug oder ein Teil eines Spielzeuges sein. Ein erfindungsgemäß ausgeführter bzw. hergestellter Gegenstand kann jedoch auch ein solcher sein, der noch weiter verarbeitet wird, beispielsweise einseitig mit einem anderen Gegenstand oder einem anderen Material, etwa einer Schaumstoffschicht oder dergleichen, verbunden wird.

## Patentansprüche

1. Gegenstand mit übereinander angeordneten und im Bereich ihrer Ränder miteinander verschweißten elastischen Folien aus einem Kunststoff, zwischen welchen sich Flüssigkeit befindet, dadurch gekennzeichnet, dass zwei dieser Folien (3, 4) im Bereich der Stirnflächen ihrer Ränder zumindest im Wesentlichen randlos verschweißt sind.

2. Gegenstand nach Anspruch 1, dadurch gekennzeichnet, dass im Inneren zumindest eine weitere Folie (6) angeordnet ist, die entweder schwimmend untergebracht ist und dabei vorzugsweise einen Umriss aufweist, der mit dem Umriss des Gegenstandes zumindest im Wesentlichen übereinstimmt, deren Fläche jedoch etwas kleiner ist, als die vom Umriss des Gegenstandes eingenommene Fläche, oder die mit den Rändern der beiden Folien (3, 4) zumindest teilweise verschweißt ist.

3. Gegenstand nach Anspruch 1 oder 2, dadurch gekennzeichnet, dass die Folien (3, 4, 6) aus glasklarem, transparentem oder undurchsichtigem Kunststoff, gegebenenfalls in beliebiger Einfärbung, bestehen.

4. Gegenstand nach einem der Ansprüche 1 bis 3, dadurch gekennzeichnet, dass er unterschiedliche, insbesondere miteinander nicht vermischbare Flüssigkeiten, vorzugsweise in unterschiedlichen Farben, ferner gegebenenfalls Schwimmteile, Schwebeteile und dergleichen enthält.

5. Verfahren zur Herstellung eines Gegenstandes mit übereinander angeordneten und im Bereich ihrer Ränder miteinander verschweißten elastischen Folien aus einem Kunststoff, zwischen welchen sich Flüssigkeit befindet, dadurch gekennzeichnet, dass zwei der Folien (3, 4), gegebenenfalls unter Einbezug einer mittleren Folie, an den Stirnflächen ihrer Ränder zusammengeführt und anschließend verschweißt werden.

6. Verfahren nach Anspruch 5, dadurch gekennzeichnet, dass eine erste Folie (4) mittels Unterdruck in eine Art Wannenform gebracht wird, anschließend mit Flüssigkeit (5) befüllt, eine zweite Folie (3) aufgelegt, die überstehenden Folienränder abgeschnitten und die beiden Folien (3, 4) an den Stirnflächen ihrer Ränder zusammengeführt werden.

7. Verfahren nach Anspruch 5 oder 6, dadurch gekennzeichnet, dass vor dem Auflegen der zweiten Folie (3) zumindest eine weitere Folie (6) aufgelegt wird, die entweder schwimmend aufgelegt wird und dabei vorzugsweise einen Umriss aufweist, welcher mit dem Umriss des Gegenstandes zumindest im Wesentlichen übereinstimmt und deren Fläche jedoch etwas kleiner ist, als die vom Umriss des Gegenstandes eingenommene Fläche, oder die mit den Rändern der beiden Folien (3, 4) zumindest teilweise verschweißt wird.

8. Vorrichtung zur Herstellung eines Gegenstandes mit übereinander angeordneten und im Bereich ihrer Ränder miteinander verschweißten elastischen Folien aus einem Kunststoff, zwischen welchen sich Flüssigkeit befindet, dadurch gekennzeichnet, dass sie zwei Formteile (1a, 2a) aufweist, die mit je einem Schweißprofil (1b, 2b) versehen sind, die zusammengefügt ein schalenartig geformtes Schweißbett bilden.

9. Vorrichtung nach Anspruch 8, dadurch gekennzeichnet, dass die Formteile (1a, 2a) Teile je eines Ober- und eines Unterwerkzeuges (1, 2) sind, die aufeinander zu bewegbar sind.

10. Vorrichtung nach Anspruch 8 oder 9, dadurch gekennzeichnet, dass die beiden Schweißprofile (1b, 2b) dem gewünschten Radius des Gegenstandes im Bereich der Schweißnaht entsprechend ausgebildet sind, insbesondere übereinstimmende kreisbogenförmige oder ähnliche Querschnitte aufweisen.
